# EUROPÄISCHE PATENTSCHRIFT

(11) **EP 1 124 871 B1**
(45) Veröffentlichungstag und Bekanntmachung des Hinweises auf die Patenterteilung: **26.03.2003**
(21) Anmeldenummer: 99953947.1
(22) Anmeldetag: 27.10.1999
(51) Int. Cl.: C08G 18/08, C08G 18/66, C08F 283/00, C09D 175/06, C08G 18/12

(54) **POLYURETHAN-POLYMER-HYBRID-DISPERSION MIT HOHER FILMHÄRTE, VERFAHREN ZU IHRER HERSTELLUNG SOWIE DEREN VERWENDUNG**
HYBRID POLYURETHANE-POLYMER DISPERSION WITH HIGH FILM HARDNESS, METHOD FOR THE PRODUCTION AND THE USE THEREOF
DISPERSION HYBRIDE POLYMERE/POLYURETHANE POSSEDANT UNE DURETE DE FILM ELEVEE, SON PROCEDE DE PRODUCTION ET SON UTILISATION

(30) Priorität: 28.10.1998 DE 19849702
(43) Veröffentlichungstag der Anmeldung: 22.08.2001
(73) Patentinhaber: Degussa Construction Chemicals GmbH, 83308 Trostberg (DE)
(72) Erfinder: INGRISCH, Stefan, D-83358 Seebruck (DE); MAIER, Alois, D-84549 Engelsberg (DE); WINKELMANN, Herbert, D-84518 Garching (DE); WOLFERTSTETTER, Franz, D-83349 Palling (DE); KERN, Alfred, D-84558 Kirchweidach (DE); WEICHMANN, Josef, D-84568 Pleiskirchen (DE)
(74) Vertreter: Weiss, Wolfgang, Dipl.-Chem. Dr.
(86) Internationale Anmeldenummer: EP9908132
(87) Internationale Veröffentlichungsnummer: WO00024798

(56) Entgegenhaltungen:
- EP-A- 0 309 113
- EP-A- 0 350 157
- DE-C- 19 722 862

## Beschreibung

Die vorliegende Erfindung betrifft eine wäßrige Polyurethan-Polymer-Hybrid-Dispersion mit hoher Filmhärte bei niedriger Mindestfilmbildetemperatur (MFFT), ein Verfahren zu ihrer Herstellung sowie deren Verwendung als Bindemittel für ein- oder zweikomponentige Lacke, Versiegelungen, Verklebungen und Beschichtungen.

Beschichtungssysteme auf Basis von wäßrigen Polyurethan-Dispersionen und Polyurethan-Polymer-Hybrid-Dispersionen haben aufgrund ihrer guten Eigenschaften wie Haftung auf unterschiedlichen Substraten, Abriebfestigkeit sowie Flexibilität und Zähigkeit in den letzten Jahren zunehmend an Bedeutung erlangt. Die Herstellung von wäßrigen Polyurethanen ist seit vielen Jahren bekannt und wird in einer großen Zahl von Veröffentlichungen im Detail beschrieben, z.B. Houben-Weyl, Methoden der organischen Chemie, Band E 20, Teil 1, S. 1659-1681; D. Dieterich, Prog. Org. Coat. 1981, 9, 281-330; J. W. Rosthauser, K. Nachtkamp, Journal Of Coated Fabrics 1986, 16, 39-79; R. Arnoldus, Surf. Coat. 1990, 3 (Waterborne Coat.), 179-98.

Die im Vergleich zu Polyurethan-Dispersionen kostengünstigeren Polyurethan-Polymer-Hybrid-Dispersionen eignen sich insbesondere zur Lackierung, Beschichtung, Versiegelung und Verklebung der Oberflächen von metallischen und mineralischen Substraten sowie von Holzwerkstoffen und Kunststoffen.

Die Polyurethan-Polymer-Hybrid-Dispersionen stellen synergistische Kombinationen aus reinen Polyurethan-Dispersionen und reinen KunststoffDispersionen dar, deren Eigenschaftsprofil durch ein einfaches Abmischen der beiden Typen von Dispersionen nicht erreicht werden kann. Polyurethan-Polymer-Hybrid-Dispersionen basieren auf sich durchdringenden Netzwerken aus Polyurethan-Polymeren und Acrylat-Polymeren, die sowohl physikalisch als auch chemisch miteinander verknüpft sein können. Dieser Typ von Dispersionen erfordert spezielle Synthesemethoden. Reine Polyurethan-Dispersionen sind für zahlreiche bauchemische Anwendungen zu teuer. Daher werden in den Polyurethan-Polymer-Hybrid-Dispersionen die vorteilhaften Eigenschaften der reinen Polyurethan-Dispersionen mit dem Kostenvorteil der reinen KunststoffDispersionen vereint. Aus diesen Gründen gewinnen die kostengünstigeren Polyurethan-Polymer-Hybrid-Dispersionen gegenüber herkömmlichen Polyurethan-Dispersionen in bauchemischen Anwendungen immer mehr an Bedeutung.

Auch im Hinblick auf die Einhaltung bestehender und zukünftiger Emissionsrichtlinien wurden in den letzten Jahren erhebliche Anstrengungen zur Entwicklung von wasserbasierenden Polyurethan-Polymer-Hybrid-Dispersionen mit einem möglichst geringen Gehalt an flüchtigen organischen Lösemitteln (VOC, volatile organic compounds) unternommen. Diese lösemittelarmen (low VOC) oder lösemittelfreien (zero VOC) Produkte bieten sowohl ökologische als auch ökonomische Vorteile und entsprechen in ihrer Performance und ihren Materialeigenschaften bereits weitgehend konventionellen Polyurethan-Systemen.

In der Bauchemie werden aus Kostengründen insbesondere Polyurethan-Polymer-Hybrid-Dispersionen mit hoher Filmhärte und guter Chemikalienresistenz gewünscht, die mit Hilfe von rationellen und zugleich universellen Herstellungsverfahren zugänglich gemacht werden können.

Die aus der einschlägigen Patentliteratur bekannten Hybrid-Systeme weisen noch eine Reihe von Nachteilen auf, die einen Ersatz von Polyurethan-Dispersionen in bestimmten Anwendungsgebieten einschränken.

So sind bekannte Herstellungsverfahren von Polyurethan-Polymer-Hybrid-Dispersionen wie z.B. in den Schriften EP 0 649 865 A1, EP 0 657 483 A1, EP 0 742 239 A1 und US 5,521,246 beschrieben, bezüglich der synthetischen Verfahrensweise sehr aufwendig.

Aus der Patentanmeldung EP 0 649 865 A1 ist ein Verfahren bekannt, bei dem während der Polyol-lsocyanatreaktion ein Teil der Acrylat-Komponente zur Prepolymer-Lösung gegeben wird. Der zweite Teil der Acrylat-Komponente wird zu einem späteren Zeitpunkt zudosiert und der letzte Teil vor der Dispergierung zur Prepolymer-Lösung zugegeben.

Gemäß der Patentanmeldung EP O 657 483 A1 wird die Acrylat-Komponente in mehreren Schritten bereits während der Polyurethan-Prepolymersynthese bei 70 °C zudosiert. Dem Polyurethan-Acrylat-Prepolymer wird dann vor der Dispergierung in Wasser nochmals ein Teil der Acrylat-Komponente zugefügt und die Initiator-Komponente anschließend bei 80 °C in organischem Lösemittel gelöst oder in Substanz zugegeben.

In der US-Patentschrift 5,521,246 wird ein ähnliches Verfahren beschrieben, bei dem die Acrylat-Komponente ebenfalls während der Polyurethan-Prepolymersynthese bei 75 °C schrittweise zugegeben wird. Nach der Neutralisation bei 25 °C und der Dispergierung in Wasser wird die Initiator-Komponente, gelöst in N-Methylpyrrolidon, zugeführt. Anschließend erst erfolgt die Kettenverlängerung mit Ethylendiamin und der letzte Teil der Acrylat-Komponente wird zur Dispersion zugegeben. Die Polymerisation wird für 2 bis 3 Stunden bei einer Temperatur von 65°C durchgeführt. Veröffentlichungen zur Polymerisation von Acrylaten mit 2,2'-Azoisobutyronitril belegen, daß diese Bedingungen für eine vollständige Monomerumsetzung unzureichend sind.

Wie in der EP 0 742 239 A1 und der EP 0 668 300 A1 offenbart, sind oft zusätzliche Emulgatoren (Surfactants) notwendig, um eine ausreichende Stabilität der Polyurethan-Mizellen während der Polymerisation zu gewährleisten.

Hohe Filmhärten von Polyurethan-Polymer-Hybrid-Dispersionen wie in den Patentanmeldungen EP 0 657 483 A1 und EP 0 668 300 A1 beschrieben, werden bisher durch komplizierte Syntheseverfahren, durch chemische Nachvernetzung der Dispersionen mit entsprechenden Reagenzien erzielt oder wie in WO 93/24551 beschrieben durch fettsäuremodifizierte Polyesterpolyole. Aus der EP 0 745 625 A1 ist z. B. eine Polyurethan-Dispersion bekannt, bei der Bis-Aldimine, die im Gleichgewicht mit den entsprechenden Bis-Enaminen stehen, über Aminogruppen in Polyurethan-Prepolymere eingebaut werden und dadurch die Filmhärte der resultierenden Polyurethan-Dispersionen erhöht wird. Hohe Filmhärten werden in den genannten Druckschriften zudem oft nur mit Hybrid-Dispersionen erzielt, die aufgrund ihrer aufwendigen Synthese relativ große Mengen organischer Lösemittel (≥ 10 Gew.-%) enthalten und eine Mindestfilmbildetemperatur von ≥ 20 °C aufweisen.

In EP-A-0 309 113 wird ein weiteres Verfahren zur Herstellung einer wasserlöslichen Polyurethan-Polymer-Dispersion beschrieben. Diese enthält ein wasserlösliches Polyurethan und ein Vinylpolymer. Das Polyurethan ist hierbei das Produkt eines Kettenverlängerers aus einer aktiven Wasserstoffkomponente und eines wasserlöslichen Isocyanat-termininerten Polyurethan-Präpolymers, das aus einer Polyisocyanatkomponente, die wenigstens 5 Gewichts-% eines 2,4'-Diphenylmethandiisocyanats enthält, entstanden ist. Die aktive Wasserstoffkomponente enthält wenigstens ein polymeres Polyol mit einem Molekulargewicht von 400 bis 6 000 und fakultativ ein oder mehrere Polyole und Polyamine mit einem Molekulargewicht unter 400. Zur Polymerisation des Vinyl-Monomers oder der Monomere werden diese mit wasserlöslichen freien Radikalinitiatoren wie z.B. einer Kombination aus tert-Butylhydroperoxid, Isoascorbinsäure und Eisen-EDTA in Kontakt gebracht.

Ziel der vorliegenden Erfindung war es, eine lösemittelarme Polyurethan-Polymer-Hybrid-Dispersion mit hoher Filmhärte und guter Chemikalienresistenz bei niedriger Mindestfilmbildetemperatur zu entwickeln, welche die genannten Nachteile des Standes der Technik nicht aufweist und zugleich auf einem einfachen Syntheseweg kostengünstig hergestellt werden kann.

Diese Aufgabe wurde erfindungsgemäß dadurch gelöst, daß eine wässrige Polyurethan-Polymer-Hybrid-Dispersion mit hoher Filmhärte bereitgestellt wird, die erhältlich ist durch Reaktion der nachfolgend genannten Umsetzungskomponenten (A) bis (G). Die Dispersion enthält somit als Umsetzungskomponenten
(A) 3 bis 25 Gew.-% einer Polyol-Komponente bestehend aus
   (i) 2 bis 20 Gew.-% eines hochmolekularen Polyols mit zwei oder mehr gegenüber Polyisocyanaten reaktiven Hydroxylgruppen und einer Molmasse von 500 bis 4000 Dalton,
   (ii) 0,5 bis 5 Gew.-% eines niedermolekularen Polyols mit zwei oder mehr gegenüber Polyisocyanaten reaktiven Hydroxylgruppen und einer Molmasse von 50 bis 500 Dalton,
   (iii) 0,5 bis 3 Gew.-% eines niedermolekularen und anionisch modifizierbaren Polyols mit zwei oder mehr gegenüber Polyisocyanaten reaktiven Hydroxylgruppen sowie einer oder mehreren gegenüber Polyisocyanaten inerten Carboxylgruppen und einer Molmasse von 100 bis 200 Dalton,
(B) 2 bis 20 Gew.-% einer Polyisocyanat-Komponente bestehend aus einem oder mehreren Polyisocyanaten, Polyisocyanat-Homologen oder/und Polyisocyanat-Derivaten mit zwei oder mehreren aliphatischen und/oder aromatischen Isocyanatgruppen,
(C) gegebenenfalls 0 bis 6 Gew.-% einer Lösemittel-Komponente bestehend aus
   (i) mindestens einem gegenüber Polyisocyanaten inerten organischen Lösemittel, das nach der Herstellung der Polyurethan-Polymer-Hybrid-Dispersion in dieser verbleibt oder durch Destillation ganz oder teilweise entfernt wird,
      und/oder
   (ii) mindestens einem gegenüber Polyisocyanaten inerten Reaktivverdünner bestehend aus mindestens einer gegenüber Polyisocyanaten inerten organischen Verbindung mit einer oder mehreren radikalisch polymerisierbaren Doppelbindungen,
(D) 0,15 bis 1,5 Gew.-% einer Neutralisations-Komponente bestehend aus mindestens einer anorganischen oder organischen Base,
(E) 0,1 bis 1 Gew.-% einer Kettenverlängerungs-Komponente bestehend aus einem oder mehreren Polyaminen mit zwei oder mehr gegenüber Polyisocyanaten reaktiven Aminogruppen,
(F) 5 bis 40 Gew.-% einer Monomer-Komponente'bestehend aus einem oder mehreren Monomeren mit einer oder mehreren radikalisch polymerisierbaren Doppelbindungen,
(G) 0,01 bis 1,5 Gew.-% einer Initiator-Komponente bestehend aus mindestens einem lipophilen Radikal-Initiator, der vorzugsweise bei einer Zerfallstemperatur innerhalb des Bereichs von 40 bis 120 °C eine Halbwertszeit von einer Stunde aufweist,
sowie als Rest Wasser.

Die Polyurethan-Hybrid-Dispersion ist erhältlich, indem in der Reaktionsstufe (a) zunächst eine Polyurethan-Basis-Dispersion hergestellt wird, indem
(a1) die Komponenten (A), (B) und gegebenenfalls (C) gegebenenfalls in Gegenwart eines Katalysators zu einem Polyurethan-Prepolymer umgesetzt werden,
(a2) das Polyurethan-Prepolymer aus Stufe (a1) in das Dispergiermedium Wasser überführt und mit der Neutralisations-Komponente (D) direkt oder indirekt neutralisiert wird und anschließend
(a3) die Polyurethan-Prepolymer-Dispersion aus Stufe (a2) mit der Kettenverlängerungs-Komponente (E), die in vor der Zugabe entnommenen Anteilen des Dispergiermediums gelöst worden ist, umgesetzt wird,
und dann in der Reaktionsstufe (b) eine Polyurethan-Polymer-Hybrid-Dispersion hergestellt wird, indem
(b1) die Polyurethan-Basis-Dispersion aus Stufe (a3) mit einem vorgefertigten Gemisch aus den Komponenten (F) und (G) versetzt wird und anschließend
(b2) durch den thermischen Zerfall der Komponente (G) eine radikalische Polymerisation der Komponente (F) innerhalb der Mizellen der Polyurethan-Basis-Dispersion durchgeführt wird.

Es hat sich überraschenderweise gezeigt, daß die erfindungsgemäße Polyurethan-Polymer-Hybrid-Dispersion sehr gute anwendungstechnische Eigenschaften wie hohe Filmhärte und Chemikalienresistenz sowie eine ausgezeichnete Stabilität der Dispersion und Gefrier-/Auftaustabilität besitzt.

Die Polykomponente (A) zum Aufbau der erfindungsgemäß vorgeschlagenen Polyurethan-Polymer-Hybrid-Dispersion mit einem Anteil von vorzugsweise 2 bis 25 Gew.-%, bezogen auf das Gesamtgewicht der Komponenten (A) bis (G) mit Wasser, besteht aus den drei Einzelkomponenten (A) (i), (A) (ii) und (A) (iii).

Die Komponente (A) (i) mit einem Anteil von vorzugsweise 2 bis 20 Gew.-% bezogen auf das Gesamtgewicht der Komponenten (A) bis (G) mit Wasser besteht aus mindestens einem höhermolekularen Polyol mit zwei oder mehr gegenüber Polyisocyanaten reaktiven Hydroxylgruppen und einer mittleren Molmasse (Zahlenmittel Mₙ) von 500 bis 4 000 Dalton. Dabei kann es sich um polymere Polyole wie Polyalkylenglykole, aliphatische und/oder aromatische Polyester, Polycaprolactone, Polycarbonate, Makromonomere, Telechele oder Epoxid-Harze oder Gemische daraus handeln. Polyalkylenglykole werden aus Monomeren wie Ethylenoxid, Propylenoxid, Butylenoxid, Tetrahydrofuran durch Polymerisation in Gegenwart von Bortrifluorid oder durch Polyaddition an Starter-Verbindungen mit reaktiven Wasserstoffatomen wie Wasser, Alkohole, Amine oder Bisphenol A erhalten. Dabei können auch Gemische der Monomeren gleichzeitig oder nacheinander eingesetzt werden. Als geeignete Polyalkylenglykole können bspw. Polyethylenglykole, Polypropylenglykole (z.B. Voranol-Typen der Fa. Dow), gemischte Polyglykole auf Basis Ethylenoxid und Propylenoxid sowie Polytetramethylenglykole bzw. Polytetrahydrofurane (z.B. PolyTHF 2000 der Fa. BASF) verwendet werden. Aliphatische und/oder aromatische Polyester-Polyole werden durch Polykondensationsreaktion und/oder Polyadditionsreaktion aus zwei- oder mehrwertigen Alkoholen und zwei-oder mehrwertigen Carbonsäuren, Carbonsäureanhydriden oder Carbonsäureestern erhalten. Als geeignete aliphatische oder aromatische Polyester können bspw. Kondensate auf Basis von 1,2-Ethandiol (Ethylenglykol), 1,4-Butandiol (1,4-Butylenglykol), 1,6-Hexandiol (1,6-Hexamethylenglykol) und 2,2-Dimethyl-1,3-propandiol (Neopentylglykol) sowie 1,6-Hexandisäure (Adipinsäure) und 1,3-Benzoldicarbonsäure (Isophthalsäure) (z.B. Bester-Typen der Fa. Poliolchimica) eingesetzt werden. Polycaprolactone (z.B. Capa-Typen der Fa. Solvay Interox) und Polycarbonate (z.B. Desmophen C 200 der Fa. Bayer) sind ebenfalls zur Gruppe der Polyester zugehörig. Erstere werden durch Umsetzung von Phosgen bzw. aliphatischen oder aromatischen Carbonaten, wie bspw. Diphenylcarbonat oder Diethylcarbonat, mit zwei-oder mehrwertigen Alkoholen erhalten. Letztere werden durch Polyaddition von Lactonen, wie bspw. ∈-Caprolacton, an Starter-Verbindungen mit reaktiven Wasserstoffatomen wie Wasser, Alkohole, Amine oder Bisphenol A hergestellt. Denkbar sind auch synthetische Kombinationen von Polyestern, Polycaprolactonen und Polycarbonaten. Ebenfalls geeignet sind Makromonomere, Telechele oder Epoxid-Harze. Bei den Makromonomeren und Telechelen handelt es sich um Polyhydroxyolefine, wie bspw, α-ω-Dihydroxypolybutadiene, α-β-Dihydroxy(meth)acrylsäureester, *α-ω*-Dihydroxy(meth)acrylsäureester oder α-ω- Dihydroxypolysiloxane. Bei den Epoxid-Harzen handelt es sich vorzugsweise um Derivate des Bisphenol-Adiglycidethers (BADGE). Bevorzugt werden lineare difunktionelle aliphatische oder aromatische Polyester-Polyole mit einer mittleren Molekularmasse (Zahlenmittel Mₙ) von 1 000 bis 4 000 Dalton und insbesondere 1000 bis 3000 Dalton. Besonders bevorzugt werden difunktionelle lineare Polyesterpolyole auf Basis von Adipinsäure, 1,4-Butylenglykol und Ethylenglykol eingesetzt.

Die Komponente (A) (ii) mit einem Anteil von vorzugsweise 0,5 bis 5 Gew.-% bezogen auf das Gesamtgewicht der Komponenten (A) bis (G) mit Wasser besteht aus mindestens einem niedermolekularen Polyol mit zwei oder mehreren gegenüber Polyisocyanaten reaktiven Hydroxylgruppen und einer Molmasse von 50 bis 500 Dalton. Als geeignete niedermolekulare Polyole können bspw. 1,2-Ethandiol (Ethylenglykol), 1,2-Propandiol (1,2-Propylenglykol), 1,3-Propandiol (1,3-Propylenglykol), 1,4-Butandiol (1,4-Butylenglykol), 1,6-Hexandiol (1,6-Hexamethylenglykol), 2-Methyl-1,3-propandiol (Handelsname MPDiol Glycol® der Fa. Arco Chemical), 2,2-Dimethyl-1,3-propandiol (Neopentylglykol), 1, 4-Bis-(hydroxymethyl)-cyclohexan (Cyclohexandimethanol), 1,2,3-Propantriol (Glycerol), 2-Hydroxymethyl-2-methyl-1,3-propanol (Trimethylolethan), 2-Ethyl-2-hydroxymethyl-1,3-propandiol (Trimethylolpropan), 2,2-Bis-(hydroxymethyl)-1,3-propandiol (Pentaerythrit) eingesetzt werden.

Bevorzugt werden 1,4-Butylenglykol oder 1,4-Butylenglykol in Kombination mit Trimethylolpropan eingesetzt.

Die Komponente (A) (iii) mit einem Anteil von vorzugsweise 0,5 bis 3 Gew.-% bezogen auf das Gesamtgewicht der Komponenten (A) bis (G) mit Wasser besteht aus mindestens einem niedermolekularen und anionisch modifizierbaren Polyol mit zwei oder mehr gegenüber Polyisocyanaten reaktiven Hydroxylgruppen und einer oder mehreren gegenüber Polyisocyanaten inerten Carboxylgruppen, die in Gegenwart von Basen ganz oder teilweise in Carboxylatgruppen überführt werden können. Als niedermolekulare und anionisch modifizierbare Polyole mit einer Molekularmasse von 100 bis 200 Dalton können bspw. 2-Hydroxymethyl-3-hydroxypropansäure (Dimethylolessigsäure), 2-Hydroxymethyl-2-methyl-3-hydroxypropansäure(Dimethylolpropionsäure),2-Hydroxymethyl-2-ethyl-3-hydroxypropansäure(Dimethylolbuttersäure),2-Hydroxymethyl-2-propyl-3-hydroxypropansäure(Dimethylolvaleriansäure),Citronensäure, Weinsäure eingesetzt werden. Bevorzugt werden Bishydroxyalkancarbonsäuren eingesetzt und vorzugsweise 2-Hydroxymethyl-2-methyl-3-hydroxypropansäure bzw. Dimethylolpropionsäure (Handelsname DMPA® der Fa. Mallinckrodt).

Die Polyisocyanat-Komponente (B) mit einem Anteil von vorzugsweise 2 bis 20 Gew.-% bezogen auf das Gesamtgewicht der Komponenten (A) bis (G) mit Wasser besteht aus mindestens einem Polyisocyanat, Polyisocyanat-Derivat oder Polyisocyanat-Homologen mit zwei oder mehr aliphatischen und/oder aromatischen Isocyanatgruppen. Geeignet sind insbesondere die in der Polyurethan-Chemie hinreichend bekannten Polyisocyanate oder Kombinationen daraus. Als geeignete aliphatische Polyisocyanate können bspw. 1,6-Diisocyanatohexan (HDI), 1-Isocyanato-5-isocyanatomethyl-3,3,5-trimethyl-cyclohexan (IPDI), Bis-(4-isocyanatocyclo-hexyl)-methan (H₁₂MDI), 1,3-Bis-(1-isocyanato-1-methyl-ethyl)-benzol (m-TMXDI) bzw. technische Isomerengemische der einzelnen aromatischen Polyisocyanate eingesetzt werden. Als geeignete aromatische Polyisocyanate können beispielsweise 2,4-Diisocyanatotoluol (TDI), Bis-(4-isocyanatophenyl)-methan (MDI) und ggf. dessen höhere Homologe (Polymeric MDI) bzw. technische Isomerengemische der einzelnen aromatischen Polyisocyanate eingesetzt werden. Weiterhin sind auch die sogenannten "Lackpolyisocyanate" auf Basis von Bis-(4-isocyanatocyclo-hexyl)-methan (H₁₂MDI), 1,6-Diisocyanatohexan (HDI), 1-Isocyanato-5-isocyanatomethyl-3,3,5-trimethyl-cyclohexan (IPDI) grundsätzlich geeignet. Der Begriff "Lackpolyisocyanate" kennzeichnet Allophanat-, Biuret-, Carbodiimid-, Isocyanurat-, Uretdion- oder Urethangruppen aufweisende Derivate dieser Diisocyanate, bei denen der Restgehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind. Die aliphatischen Polyisocyanate sind gegenüber den aromatischen Polyisocyanaten zu bevorzugen. Weiterhin werden Polyisocyanate mit Isocyanatgruppen unterschiedlicher Reaktivität bevorzugt. Insbesondere wird Isophorondiisocyanat bzw. 1-Isocyanato-5-isocyanato-methyl-3,3,5-trimethyl-cyclohexan bzw. dessen technische Isomerengemische eingesetzt.

Die fakultativ vorhandene Solvens-Komponente (C) (i) mit einem Anteil von vorzugsweise bis 6 Gew.-% bezogen auf das Gesamtgewicht der Komponenten (A) bis (G) mit Wasser besteht aus mindestens einem gegenüber Polyisocyanaten inerten und vorzugsweise mit Wasser ganz oder teilweise mischbaren Solvens, das nach der Herstellung in der Polyurethan-Dispersion verbleiben oder durch Destillation ganz oder teilweise entfernt werden kann. Geeignete Solventien sind beispielsweise hochsiedende und hydrophile organische Lösemittel wie N-Methylpyrrolidon, Diethylenglykoldimethyl-ether, Dipropylenglykoldimethylether (Proglyde DMM® der Fa. Dow), niedrig-siedende Lösemittel wie Aceton, Butanon oder beliebige Gemische daraus. Bevorzugt wird ein hochsiedendes und hydrophiles Lösemittel wie N-Methyl-pyrrolidon eingesetzt, das nach der Herstellung in der Dispersion verbleibt und als Koaleszenzhilfsmittel fungieren kann.

Die fakultativ vorhandene Solvens-Komponente (C) (ii) mit einem Anteil von vorzugsweise bis 6 Gew.-% bezogen auf das Gesamtgewicht der Komponenten (A) bis (G) mit Wasser ist aus mindestens einem, gegenüber Polyisocyanaten inerten Reaktivverdünnner, zusammengesetzt, bestehend aus mindestens einer gegenüber Polyisocyanaten inerten organischen Verbindung (wie z. B. Polyethylenglykol), die eine oder mehrere radikalisch polymerisierbare Doppelbindungen enthält. Geeignete Solventien sind beispielsweise Derivate der Acrylsäure wie Methoxypolyethylenglykolmethacrylate, Polyethylenglykoldimethacrylate, Methylmethacrylat, n-Butylacrylat, Methylacrylat, Acetoacetoxyethylmethacrylat, oder Polyethylenglykolmethylvinylether, N-Vinylimidazol und N-Vinylpyrrolidon. Bevorzugt werden Methoxypolyethylenglykolmethacrylate mit 2 bis 20 Ethylenglykoleinheiten und Methacrylate eingesetzt.

Die Neutralisations-Komponente (D) mit einem Anteil von vorzugsweise 0,15 bis 1,5 Gew.-% bezogen auf das Gesamtgewicht der Komponenten (A) bis (G) mit Wasser besteht aus einer oder mehireren anorganischen und/oder organischen Base(n), die zur vollständigen oder teilweisen Neutralisation von Carboxylgruppen der Komponente (A)(ii) dienen. Als geeignete Basen können tertiäre Amine wie N,N-Dimethylethanolamin, N-Methyldiethanolamin, N-Methyldiisopropanolamin, Dimethylisopropanolamin, N-Methylmorpholin, N-Ethylmorpholin, Triethanolamin, Triethylamin, Triisopropylamin, Ammoniak oder Alkalihydroxide wie Lithiumhydroxid, Natriumhydroxid, Kaliumhydroxid verwendet werden. Bevorzugt werden tertiäre Amine und insbesondere Triethylamin eingesetzt.

Mit der Neutralisations-Komponente (D) wird vor und/oder während der Dispergierung eine direkte und/oder indirekte Neutralisation, d.h. eine anionische Modifizierung der Polyurethan-Prepolymere vorgenommen. Bei der Neutralisation werden aus den Carboxylgruppen Carboxylatgruppen gebildet, die zur anionischen Modifizierung der Polyurethan-Dispersion und Polyurethan-Basis-Dispersion und der daraus hergestellten Polyurethan-Polymer-Hybrid-Dispersion dienen.

Die Kettenverlängerungs-Komponente (E) mit einem Anteil von vorzugsweise 0,1 bis 1 Gew.-% bezogen auf das Gesamtgewicht der Komponenten (A) bis (G) mit Wasser besteht aus mindestens einem Polyamin mit zwei oder mehr gegenüber Polyisocyanaten reaktiven Aminogruppen. Geeignete Polyamine sind beispielsweise Adipinsäuredihydrazid, Ethylendiamin, Diethylentriamin, Triethylentetramin, Tetraetylenpentamin, Pentaethylenhexamin, Dipropylentriamin, Hexamethylendiamin, Hydrazin, Isophorondiamin, N-(2-Aminoethyl)-2-aminoethanol, Addukte aus Salzen der 2-Acrylamido-2-methylpropan-1-sulfonsäure (AMPS) und Ethylendiamin oder beliebige Kombinationen dieser Polyamine. Bevorzugt werden difunktionelle primäre Amine und insbesondere 1,2-Diaminoethan (Ethylendiamin) eingesetzt. Die Kettenverlängerung der Polyurethan-Prepolymer-Dispersion führt zum Aufbau der Molekularmasse innerhalb der Mizellen und zur Bildung einer Polyurethan-Polyharnstoff-Dispersion hoher Molekularmasse. Die reaktiven Isocyanatgruppen reagieren dabei mitder Kettenverlängerungs-Komponente wesentlich rascher als mit Wasser. Die Isocyanatgruppen der Polyurethan-Prepolymere werden dabei in Harnstoffgruppen überführt. Im Anschluß werden eventuell noch vorhandene freie Isocyanatgruppen mit Wasser vollständig kettenverlängert. Gemäß einer bevorzugten Ausführungsform enthält die Komponente (E) 20 bis 80 Gew.-%, insbesondere 50 Gew.-%, an Dispergiermedium (Wasser).

Der Feststoffgehalt des Polyurethan-Polymers bestehend aus den Komponenten (A) bis (E) beträgt vorzugsweise 20 bis 60 Gew.-%, insbesondere 30 bis 50 Gew.-%, bezogen auf das Gesamtgewicht der zunächst hergestellten Polyurethan-Basis-Dispersion. Die Mizellen des Polyurethan-Polymers besitzen eine bevorzugte mittlere Teilchengröße von 50 bis 500 nm, insbesondere 100 bis 200 nm. Außerdem weist das Polyurethan-Polymer eine mittlere Molmasse von vorzugsweise 25 000 bis 100 000 Dalton auf.

Die Monomerkomponente (F) mit einem Anteil von vorzugsweise 5 bis 40 Gew.-% bezogen auf das Gesamtgewicht der Komponenten (A) bis (G) mit Wasser besteht aus einem oder mehreren Monomeren mit einer oder mehreren radikalisch polymerisierbaren Doppelbindungen. Geeignete Monomere sind beispielsweise Derivate der Acrylsäure wie Methacrylsäure, Methacrylsäureanhydrid, Methacrylnitril, Methacrylamid, Methylmethacrylat, Ethylmethacrylat, n-Butylmethacrylat, i-Butylmethacrylat, n-Hexylmeth-acrylat, Cyclohexylmethacrylat, 2-Ethylhexylmethacrylat, Isobornylmethacrylat, Benzylmethacrylat, 2-Hydroxyethylmethacrylat, Hydroxypropylmethacrylat, 2-Hydroxyethylacrylat, Hydroxypropylacrylat, 2-Dimethylaminoethylmethacrylat, Ethyltriglykolmethacrylat, Tetrahydrofurfurylmethacrylat, Methacrylsäureanhydrid, Allylmethacrylat, Ethylenglykoldimethacrylat, Diethylenglykoldimethacrylat, Triethylenglykoldimethacrylat, Tetraethylenglykoldimethacrylat, Polyethylenglykol-400-dimethacrylat, 1,3-Butandioldimethacrylat, 1,4-Butandioldimethacrylat, 1,6-Hexandioldimethacrylat, Methylacrylat, n-Butylacrylat, n-Hexylacrylat, n-Octylacrylat, n-Octylmethacrylat, Acrylsäure, Acetoacetoxyethylmethacrylat, Acrylamid, N-Butoxymethylmethacrylamid, N-Isobutoxymethylmethacrylamid, 2-Acrylamido-2-methylpropan-1-sulfonsäure (AMPS), Methoxypolyethylenglykolmethacrylate, Methoxypolyethylenglykolacrylate, Polyethylenglykoldimethacrylate oder Styrol-Derivate wie Styrol, Methytstyrol, Ethylstyrol. Bevorzugt werden Acrylsäure (Propensäure) und deren Derivate und/oder Methacrylsäure (2-Methylpropensäure) und deren Derivate und/oder Styrol und dessen Derivate eingesetzt, z.B. Gemische aus Methylmethacrylat, n-Butylacrylat und Styrol. Bevorzugt werden auch Kombinationen von 75 bis 85 Gew.-% Methyl-methacrylat, 5 bis 15 Gew.-% n-Butylacrylat und ggf. bis zu 20 Gew.-% weiteren Monomeren, besonders bevorzugt Kombinationen aus 85 Gew.-% Methylmethacrylat und 15 Gew.-% n-Butylacrylat oder aus 75 Gew.-% Methylmethacrylat, 15 Gew.-% n-Butylacrylat und 10 Gew.-% Styrol, eingesetzt.

Die Initiatorkomponente (G) mit einem Anteil von vorzugsweise 0,01 bis 1,5 Gew.-% bezogen auf das Gesamtgewicht der Komponenten (A) bis (G) mit Wasser besteht aus mindestens einem lipophilen Radikal-Initiator, der vorzugsweise bei einer Zerfallstemperatur innerhalb des Bereichs von 40 bis 120°C eine Halbwertszeit von einer Stunde aufweist, d.h. innerhalb des Bereichs von 40 bis 120°C existiert eine Temperatur, bei der der verwendete Initiator zu 50% innerhalb einer Stunde zerfällt. Geeignete Initiatoren sind beispielsweise Peroxidinitiatoren wie Dilauroylperoxid, Dibenzoylperoxid, tert. Amylperoxyneodecanoat, tert. Butylperoxyneodecanoat, tert. Butylperoxypivalat, 2,5-Dimethyl-2,5-di(2-ethylhexanoylperoxy)hexan, tert. Amylperoxy-2-ethylhexanoat, tert. Butylperoxy-2-ethylhexanoat, tert. Amylperoxybenzoat, tert. Butylperoxybenzoat, Persulfat-Initiatoren wie Ammoniumperoxodisulfat, Natriumperoxodisulfat, Kaliumperoxodisulfat, Azo-Initiatoren wie 2,2'-Azobis(2-cyclopropylpropionitril), 2,2'-Azobis(2,4-dimethylvaleronitril), 2,2'-Azobis(2-methylbutyronitril),2,2'-Azobis(2-methylpropionitril), 1,1'-Azobis(cyclohexan-1-carbonitril). Bevorzugt werden Radikal-Initiatoren mit einer oder mehreren Azo- oder Peroxogruppen, die bei einer Zerfallstemperatur von 40 bis 120°C, vorzugsweise von 70 bis 90°C eine Halbwertszeit von einer Stunde aufweisen, eingesetzt. Besonders bevorzugt wird 2,2'-Azobis(2-methylpropionlitril) bzw. 2,2'-Azoisobutyronitril eingesetzt.

Der Feststoffgehalt in der Polyurethan-Polymer-Hybrid-Dispersion aus den Komponenten (A) bis (G) mit Wasser beträgt vorzugsweise 20 bis 60 Gew.-%, besonders bevorzugt 30 bis 50 Gew.-%, bezogen auf das Gesamtgewicht der Polyurethan-Polymer-Hybrid-Dispersion. Hierbei liegt das Verhältnis der anteiligen Festkörpergehalte aus Polyurethan-Harz und Polymer-Harz insbesondere bei 20 bis 80 zu 80 bis 20 Gew.-%, vorzugsweise bei 40 bis 60 zu 60 bis 40 Gew.-%, und besonders bevorzugt bei 50 zu 50 Gew.-%.

Die mittleren Partikelgrößen der Mizellen des Polyurethan-Hybrid-Polymers betragen vorzugsweise 50 bis 500 nm, insbesondere 50 bis 250 nm. Das Polyurethan-Hybrid-Polymer besitzt eine bevorzugte mittlere Molmasse von 25 000 bis 250 000 Dalton.

Ein weiterer Gegenstand der Erfindung ist ein Verfahren zur Herstellung der erfindungsgemäßen Polyurethan-Polymer-Hybrid-Dispersion, dadurch gekennzeichnet, daß in der Reaktionsstufe (a) zunächst eine Polyurethan-Basis-Dispersion hergestellt wird, wobei
(a1) 2 bis 20 Gew.-% der hochmolekularen Polyol-Komponente (A) (i), 0,5 bis 5 Gew.-% der niedermolekularen Polyol-Komponente (A) (ii) sowie 0,5 bis 3 Gew.-% des niedermolekularen und anionisch modifizierbaren Polyols (A) (iii) mit 2 bis 20 Gew.-% der Polyisocyanat-Komponente (B) gegebenenfalls in Gegenwart von 0 bis 6 Gew.-% der Lösemittel-Komponente (C) und gegebenenfalls in Gegenwart eines Katalysators zu einem Polyurethan-Prepolymer umgesetzt werden,
(a2) das Polyurethan-Prepolymer aus Stufe (a1) in das Dispergiermedium Wasser überführt und mit 0,15 bis 1,5 Gew.-% der Neutralisations-Komponente direkt oder indirekt neutralisiert wird und anschließend
(a3) die Polyurethan-Prepolymer-Dispersion aus Stufe (a2) mit 0,1 bis 1 Gew.-% der Kettenverlängerungs-Komponente (E), die in vor der Zugabe entnommenen Anteilen des Dispergiermediums gelöst worden ist, umgesetzt wird,
und dann in der Reaktionsstufe (b) eine Polyurethan-Polymer-Hybrid-Dispersion hergestellt wird, indem
(b1) die Polyurethan-Basis-Dispersion aus Stufe (a3) mit einem vorgefertigten Gemisch aus 5 bis 40 Gew.-% der Monomer-Komponente (F) und 0,01 bis 1,5 Gew.-% der Initiator-Komponente (G) versetzt wird und anschließend
(b2) durch den thermischen Zerfall der Komponente (G) eine radikale Polymerisation der Komponente (F) innerhalb der Mizellen der Polyurethan-Basis-Dispersion durchgeführt wird.

Zur Herstellung der erfindungsgemäßen Polyurethan-Polymer-Hybrid-Dispersion wird demnach unter Anwendung der in der Polyurethanchemie üblichen Techniken in der Reaktionsstufe (a) eine Polyurethan-Basis-Dispersion mit Hilfe eines Prepolymer-Mixing-Process hergestellt. Dazu werden im Verfahrensschritt (a1) vorzugsweise 3 bis 25 Gew.-% der höhermolekularen Polyol-Komponente (A) (i), vorzugsweise 0,5 bis 5 Gew.-% der niedermolekularen Polyol-Komponente (A) (ii) sowie vorzugsweise 0,5 bis 3 Gew.-% des niedermolekularen und aniopisch modifizierbaren Polyols (A) (iii) mit vorzugsweise 2 bis 20 Gew.-% der Polyisocyanat-Komponente (B), gegebenenfalls in Gegenwart von 0 bis 6 Gew.-% der Lösemittel-Komponente (C), bei einer Temperatur von vorzugsweise 60 bis 120°C, besonders bevorzugt 80 bis 100 °C, zu einem Polyurethan-Prepolymer umgesetzt. Hierbei beträgt das NCO/OH - Equivalent-Verhältnis der Komponenten (A) und (B) vorzugsweise 1,2 bis 2,0, besonders bevorzugt 1,4 bis 1,8. Das Polyurethan-Prepolymer kann gegebenenfalls in Gegenwart von 0,01 bis 1 Gew.-% bezogen auf die Komponenten (A), (B) und (C) eines für Polyadditionsreaktionen an Polyisocyanaten üblichen Katalysators hergestellt werden.

Das erhaltene Polyurethan-Prepolymer aus Stufe (a1) wird im Verfahrensschritt (a2) in das Dispergiermedium Wasser überführt, das für eine indirekte Neutralisation vorzugsweise die Neutralisations-Komponente (D) enthält. Dabei wird das Prepolymer vorzugsweise bei einer Temperatur von 30 bis 60 °C, insbesondere 40 bis 50 °C, in das Dispergiermedium Wasser überführt, das dann vorzugsweise 0,15 bis 1,5 Gew.-% der zur Neutralisation erforderlichen Komponente (D) enthält. Im Falle einer direkten Neutralisation kann die Neutralisations-Komponente (D) jedoch bereits nach Reaktionsstufe (a1) in das Polyurethan-Prepolymer eingerührt werden. Die Neutralisations-Komponente wird vorzugsweise in einer solchen Menge zugegeben, daß der Neutralisationsgrad bezogen auf die freien Carboxylgruppen des Polyurethan-Prepolymers bei 70 bis 100 Equivalent-%, insbesondere bei 90 und 100 Equivalent-%, liegt.

Anschließend wird in der Verfahrensstufe (a3) die Polyurethan-Prepolymer-Dispersion aus Stufe (a2) mit vorzugsweise 0,1 bis 1 Gew.-% der zur Kettenverlängerung erforderlichen Komponente (E), die vorzugsweise in gelöster Form vorliegt, z.B. gelöst in vor der Zugabe entnommenen Anteilen des Dispergiermediums, bei Temperaturen von vorzugsweise 20 bis 60 °C, insbesondere 30 bis 50 °C, umgesetzt, wobei die Komponente (E) vorzugsweise 20 bis 80 Gew.-%, insbesondere 50 Gew.-% an Dispergiermedium enthält. Die Kettenverlängerungs-Komponente (E) wird vorzugsweise in einer solchen Menge eingesetzt, daß der Kettenverlängerungsgrad bezogen auf die freien Isocyanatgruppen des Polyurethan-Prepolymers bei 50 bis 100 Equivalent-%, insbesondere bei 60 bis 90 Equivalent-%, liegt.

Die im Verfahrensschritt (a3) erhaltene Polyurethan-Basis-Dispersion dient sodann zur Herstellung der Polyurethan-Polymer-Hybrid-Dispersion in Stufe (b). Dabei wird im Verfahrensschritt (b1) die Polyurethan-Basis-Dispersion aus Stufe (a3) mit einem vorgefertigten Gemisch aus vorzugsweise 5 bis 40 Gew.-% der Monomer-Komponente (F) und vorzugsweise 0,01 bis 1,5 Gew.-% der Initiator-Komponente (G) bei einer Temperatur von vorzugsweise 15 bis 35 °C, insbesondere 20 bis 30 °C, versetzt. Anschließend wird im Verfahrensschritt (b2) die Dispersion erwärmt und durch den thermischen Zerfall der Komponente (G) eine radikalische Polymerisation der Komponente (F) innerhalb der Mizellen der Polyurethan-Basis-Dispersion durchgeführt. Die Durchführung der Reaktionsstufe (b2) erfolgt vorzugsweise bei einer Temperatur, die innerhalb eines Bereichs von ± 10 °C bezogen auf die Temperatur liegt, bei der die Kornponente (G) eine Halbwertszeit von 1 Stunde aufweist. Bei Verwendung von 2,2'-Azobisiso-butyronitril bzw. 2,2'-Azobis(2-methyl-propionitril) als Komponente (G) wird die Reaktionsstufe (b2) vorzugsweise bei einer Temperatur von 80 ± 10°C durchgeführt. Gemäß einer bevorzugten Ausführungsform wird das Initiator/Monomer-Molverhältnis der Komponenten (F) und (G) im Bereich von 0,001 bis 0,05 mol-%, vorzugsweise auf 0,008 mol-%, eingestellt. Nach beendeter Polymerisation wird die fertige Polyurethan-Polymer-Hybrid-Dispersion abgekühlt und filtriert.

Der Vorteil dieser Herstellungsmethode liegt darin, daß Monomere und Initiator zusammen bei Raumtemperatur zugegeben werden können und daß für deren Stabilisierung in der Polyurethan-Dispersion keinerlei zusätzliche Emulgatoren (Surfactants) notwendig sind. Die Ladungsdichte der Polyurethan-Mizellen ist ausreichend groß, um die Polymerisation der Monomere innerhalb der Mizellen ohne Emulgatoren - allein durch deren Stabilität - zu gewährleisten. Die Stabilität der Polyurethan-Polymer-Hybrid-Mizellen bleibt auch nach vollendeter Polymerisation über einen langen Zeitraum ohne weitere stabilisierende Zusätze erhalten. Erfahrungsgemäß werden bei Verwendung des Prepolymer-Mixing-Process geringe Mengen an Nebenprodukten gebildet, die in der Polyurethan-Dispersion nicht ausreichend stabilisiert werden und somit in Form von feinen Nadeln sedimentieren. Diese Nebenprodukte müssen über feine Filter aufwendig von der Dispersion abgetrennt werden. Eine Verdünnung des Kettenverlängerungsmittels mit Teilen des Dispergiermediums kann diesen Effekt überraschenderweise vollständig zurückdrängen.

Die erfindungsgemäße Polyurethan-Polymer-Hybrid-Dispersion ist im Vergleich zu den aus dem Stand der Technik bekannten Produkten verfahrenstechnisch weniger aufwendig, von der Stoffzusammensetzung viel unkomplizierter aufgebaut und stellt somit ein kostengünstiges Bindemittel für bauchemische Anwendungen dar, das in seiner Performance und seinen Materialeigenschaften kommerziell verfügbare Produkte erreicht oder übertrifft.

Die erfindungsgemäße Polyurethan-Dispersion eignet sich hervorragend als Bindemittel für ein- oder zweikomponentige Lacke, Versiegelungen, Verklebungen und Beschichtungen der Oberflächen von mineralischen Baustoffen, wie z. B. Beton, Holz und Holzwerkstoffen, Metall und Kunststoffen.

Die Vorteile der erfindungsgemäßen Polyurethan-Polymer-Hybrid-Dispersion, wie hohe Härte bei gleichzeitig hoher Flexibilität der rißfreien Filme, gute Chemikalienresistenz, große Stabilität der Dispersion in einem weiten pH-Bereich, gute Gefrier-Auftaustabilität und der Einsatz kostengünstiger Rohstoffe, werden in einem vereinfachten Syntheseweg, ohne nachträgliche chemische Vernetzung, bei zugleich niedrigem Gehalt an organischem Lösemittel (≤ 4 Gew.-%) und guter Verfilmung bei Temperaturen ≥ + 10°C erzielt.

Die nachfolgenden Beispiele sollen die Erfindung näher veranschaulichen.

### Beispiel 1

### Herstellung der Polyurethan-Basis-Dispersion

### Variante A (ohne Trimethylolpropan)

In einem Vierhalskolben ausgerüstet mit KPG-Rührer, Rückflußkühler, Thermometer und Stickstoffdeckung wurden 102,2 g Isophorondiisocyanat vorgelegt und mit der halben Menge eines vorgefertigten Polyol-Gemisches, bestehend aus 100,00 g eines Polyester-Polyols (Handelsname: B 42H der Fa. Poliolchimica), 15,00 g 1,4-Butandiol (Fa. Aldrich), 15,00 g Dimethylolpropionsäure (Handelsname: DMPA® der Fa. Mallinckrodt) und 50,00 g N-Methylpyrrolidon (Fa. Aldrich), versetzt. Die Mischung wurde unter Stickstoffdeckung bei 80 bis 90 °C bis zum Abklingen der Exothermie gerührt. Nach der Zugabe der zweiten Hälfte des Polyol-Gemisches wurde unter Stickstoffdeckung bei 80 bis 90 °C gerührt, bis der berechnete NCO-Gehalt erreicht wurde (NCO/OH = 1,40). Der Verlauf der Reaktion wurde acidimetrisch verfolgt. Nach Abschluß der Polyadditionsreaktion wurde ein NCO-Gehalt von 3,91 Gew.-% (Theorie: 3,88 Gew.-%) gefunden.
250,00 g des Prepolymers wurden dann unter intensivem Rühren in ein Gemisch aus 333,34 g demineralisiertem Wasser und, 10,06 g Triethylamin (100 mol %) (indirekte Neutralisation) dispergiert. Zum Aufbau der Polyurethan-Dispersion wurde mit einem Gemisch aus 4,66 g Ethylendiamin (70 Equivalent-%) und 4,66 g demineralisiertem Wasser kettenverlängert.

Es wurde eine stabile Polyurethan-Dispersion mit folgender Charakteristik erhalten:

| Aussehen | semitransluzent |
|---|---|
| Festkörpergehalt | 35 Gew.-% |
| pH-Wert | 7,30 |
| Härte nach König | 125 s (nach 7 Tagen Trocknung) |
| NMP-Gehalt (berechnet) | 7,4 Gew.-% |

### Variante B (mit Trimethylolpropan)

In einem Vierhalskolben ausgerüstet mit KPG-Rührer, Rückflußkühler, Thermometer und Stickstoffdeckung wurden 105,0 g Isophorondiisocyanat vorgelegt und mit der halben Menge eines vorgefertigten Polyol-Gemisches, bestehend aus 100,00 g eines Polyester-Polyols (Handelsname: B 42H der Fa. Poliolchimica), 15,00 g 1,4-Butandiol (Fa. Aldrich), 15,00 g Dimethylolpropionsäure (Handelsname: DMPA® der Fa. Mallinckrodt), 1,00 g Trimethylolpropan (Fa. Aldrich) und 50,00 g N-Methylpyrrolidon (Fa. Aldrich), versetzt. Die Mischung wurde unter Stickstoffdeckung bei 80 bis 90°C bis zum Abklingen der Exothermie gerührt. Nach der Zugabe der zweiten Hälfte des Polyol-Gemisches wurde unter Stickstoffdeckung bei 80 bis 90 °C gerührt, bis der berechnete NCO-Gehalt erreicht wurde (NCO/OH = 1,40). Der Verlauf der Reaktion wurde acidimetrisch verfolgt. Nach Abschluß der Polyadditionsreaktion wurde ein NCO-Gehalt von 4,12 Gew.-% (Theorie: 3,66 Gew.-%) gefunden.

250,00 g des Prepolymers wurden dann unter intensivem Rühren in ein Gemisch aus 333,42 g demineralisiertem Wasser und 9,88 g Triethylamin (100 mol %) (indirekte Neutralisation) dispergiert. Zum Aufbau der Polyurethan-Dispersion wurde mit einem Gemisch aus 4,58 g Ethylendiamin (70 Equivalent-%) und 4,58 g demineralisiertem Wasser kettenverlängert.

Es wurde eine stabile Polyurethan-Dispersion mit folgender Charakteristik erhalten:

| Variante C und D (analog der Vorgehensweise B) | | | |
|---|---|---|---|
| | Variante B | Variante C | Variante D |
| Polyesterpolyol Bester 42 H (OH-Zahl: 56,1 mg KOH g-1) | 100,00 g | 100,00 g | 100,00 g |
| 1,4-Butandiol (BD14) | 15,00 g | 15,00 g | 15,00 g |
| Trimethylolpropan (TMP) | 1,00 g | 1,50 g | 15,00 g |
| Dimethylolpropionsäure (DMPA®) | 15,00 g | 15,00 g | 15,00 g |
| N-Methylpyrrolidon (NMP) | 50,00 g | 50,00 g | 50,00 g |
| Isophorondiisocyanat (IPIDI) | 105,00 g | 106,10 g | 107,30 g |
| NCO/OH | 1,40 | 1,40 | 1,40 |
| Prepolymer | 250,00 g | 250,00 g | 250,00 g |
| demineralisiertes Wasser | 333,42 g | 333,18 g | 333,37 g |
| Triethylamin (TEA) | 9,88 g | 9,83 g | 9,77 g |
| Ethylendiamin (EDA) | 4,58 g | 4,82 g | 4,62 g |
| demin. Wasser für 1:1 Verd. mit EDA | 4,58 g | 4,82 g | 4,63 g |
| NCO-Gehalt Theorie/Gefunden | 3,88/4,12 | 3,98/3,85 | 4,00/3,70 |
| Aussehen | semitransluzent | semitransluzent | semitransluzent |
| Feststoffgehalt | 35 Gew.-% | 35 Gew.-% | 35 Gew.-% |
| pH-Wert | 7,30 | 7,25 | 7,28 |
| Härte nach König (nach 7 Tagen) gemäß DIN 53 157 | 130 s | 135 s | 135 s |

### Polyurethan-Polymer-Hybrid-Dispersion mit hoher Härte

Für die Herstellung der Polyurethan-Polymer-Hybrid-Dispersionen wurde jeweils eine der unter Beispiel 1 vorgestellten Polyurethan-Dispersionen (Varianten A bis D) als Matrix für die Emulsionspolymerisation der olefinischen Monomere verwendet.

Der Hybridisierungsschritt lief folgendermaßen ab:

### Beispiel 2

| | | |
|---|---|---|
| 1. | Polyurethan-Dispersion (Beispiel 1 A) | 300,00 g |
| 2. | demineralisiertes Wasser | 122,00 g |
| 3. | wässrige Ammoniak-Lösung (25 %-ig) | 2,0 mL |
| 4. | n-Butylacrylat (BA) | 15,75 g |
| 5. | Methylmethacrylat (MMA) | 89,25 g |
| 6. | 2,2'-Azoisobutyronitril (AIBN) | 1,33 g |

Die Polyurethan-Dispersion (1) wurde im Reaktionsgefäß bei Raumtemperatur vorgelegt und unter gleichmäßigem Rühren mit Wasser (2) verdünnt. Man fügte wässrige Ammoniak-Lösung (3) hinzu, bis ein pH-Wert von ca. 8,0 erreicht war. n-Butylacrylat (4), Methylmethacrylat (5) und 2,2'-Azoisobutyronitril (6) wurden separat in einem Gefäß bei Raumtemperatur gut vermischt und binnen 90 bis 120 min der Polyurethan-Dispersion hinzugefügt. Nach vollständiger Zugabe der Monomer-Initiator-Lösung wurde die Dispersion auf 80 bis 82 °C aufgeheizt und bei dieser Temperatur für 5 Stunden gehalten. Anschließend wurde die Dispersion auf 25 °C abgekühlt und durch ein Filter (Porengröße 80 µm) filtriert. Es wurde eine feinteilige opake Hybrid-Dispersion mit einem Feststoffgehalt von ca. 39 Gew.-% erhalten.

### Beispiel 3

Der Hybridisierungsschritt lief analog zu der in Beispiel 2 beschriebenen Verfahrensweise ab. Die verwendeten Substanzen sind in nachstehender Tabelle aufgeführt:

| | | |
|---|---|---|
| 1. | Polyurethan-Dispersion (Beispiel 1 B) | 300,00 g |
| 2. | demineralisiertes Wasser | 122,00 g |
| 3. | wässrige Ammoniak-Lösung (25 %-ig) | 2,0 mL |
| 4. | n-Butylacrylat (BA) | 15,75 g |
| 5. | Methylmethacrylat (MMA) | 89,25 g |
| 6. | 2,2'-Azoisobutyronitril (AIBN) | 1,33 g |

### Beispiel 4

Der Hybridisierungsschritt lief analog zu der in Beispiel 2 beschriebenen Verfahrensweise ab. Die verwendeten Substanzen sind in nachstehender Tabelle aufgeführt:

| | | |
|---|---|---|
| 1. | Polyurethan-Dispersion (Beispiel 1 B) | 300,00 g |
| 2. | demineralisiertes Wasser | 122,00 g |
| 3. | wässrige Ammoniak-Lösung (25 %-ig) | 2,0 mL |
| 4. | n-Butylacrylat (BA) | 15,75 g |
| 5. | Methylmethacrylat (MMA) | 78,75 g |
| 6. | Styrol | 10,50 g |
| 7. | 2,2'-Azoisobutyronitril (AIBN) | 1,33 g |

### Beispiel 5

Der Hybridisierungsschritt lief analog zu der in Beispiel 2 beschriebenen Verfahrensweise ab. Die verwendeten Substanzen sind in nachstehender Tabelle aufgeführt:

| | | |
|---|---|---|
| 1. | Polyurethan-Dispersion (Beispiel 1 C) | 300,00 g |
| 2. | demineralisiertes Wasser | 122,00 g |
| 3. | wässrige Ammoniak-Lösung (25 %-ig) | 2,0 mL |
| 4. | n-Butylacrylat (BA) | 8,40 g |
| 5. | Methylmethacrylat (MMA) | 96,6 g |
| 6. | 2,2'-Azoisobutyronitril (AIBN) | 1,35 g |

### Beispiel 6

Der Hybridisierungsschritt lief analog zu der in Beispiel 2 beschriebenen Verfahrensweise ab. Die verwendeten Substanzen sind in nachstehender Tabelle aufgeführt:

| | | |
|---|---|---|
| 1. | Polyurethan-Dispersion (Beispiel 1 C) | 300,00 g |
| 2. | demineralisiertes Wasser | 122,00 g |
| 3. | wässrige Ammoniak-Lösung (25 %-ig) | 2,0 mL |
| 4. | n-Butylacrylat (BA) | 15,75 g |
| 5. | Methylmethacrylat (MMA) | 89,25 g |
| 6. | 2,2'-Azoisobutyronitril (AIBN) | 1,33 g |

### Beispiel 7

Der Hybridisierungsschritt lief analog zu der in Beispiel 2 beschriebenen Verfahrensweise ab. Die verwendeten Substanzen sind in nachstehender Tabelle aufgeführt:

| | | |
|---|---|---|
| 1. | Polyurethan-Dispersion (Beispiel 1 B) | 300,00 g |
| 2. | demineralisiertes Wasser | 122,00 g |
| 3. | wässrige Ammoniak-Lösung (25 %-ig) | 2,0 mL |
| 1. | Polyurethan-Dispersion (Beispiel 1 B) | 300,00 g |
| 4. | n-Butylacrylat (BA) | 10,50 g |
| 5. | Methylmethacrylat (MMA) | 84,00 g |
| 6. | Styrol | 10,50 g |
| 7. | 2,2'-Azoisobutyronitril (AIBN) | 1,34 g |

### Beispiel 8

Der Hybridisierungsschritt lief analog zu der in Beispiel 2 beschriebenen Verfahrensweise ab. Die verwendeten Substanzen sind in nachstehender Tabelle aufgeführt:

| | | |
|---|---|---|
| 1. | Polyurethan-Dispersion (Beispiel 1 D) | 300,00 g |
| 2. | demineralisiertes Wasser | 122,00 g |
| 3. | wässrige Ammoniak-Lösung (25 %-ig) | 2,0 mL |
| 4. | n-Butylacrylat (BA) | 15,75 g |
| 5. | Methylmethacrylat (MMA) | 89,25 g |
| 6. | 2,2'-Azoisobutyronitril (AIBN) | 1,33 g |

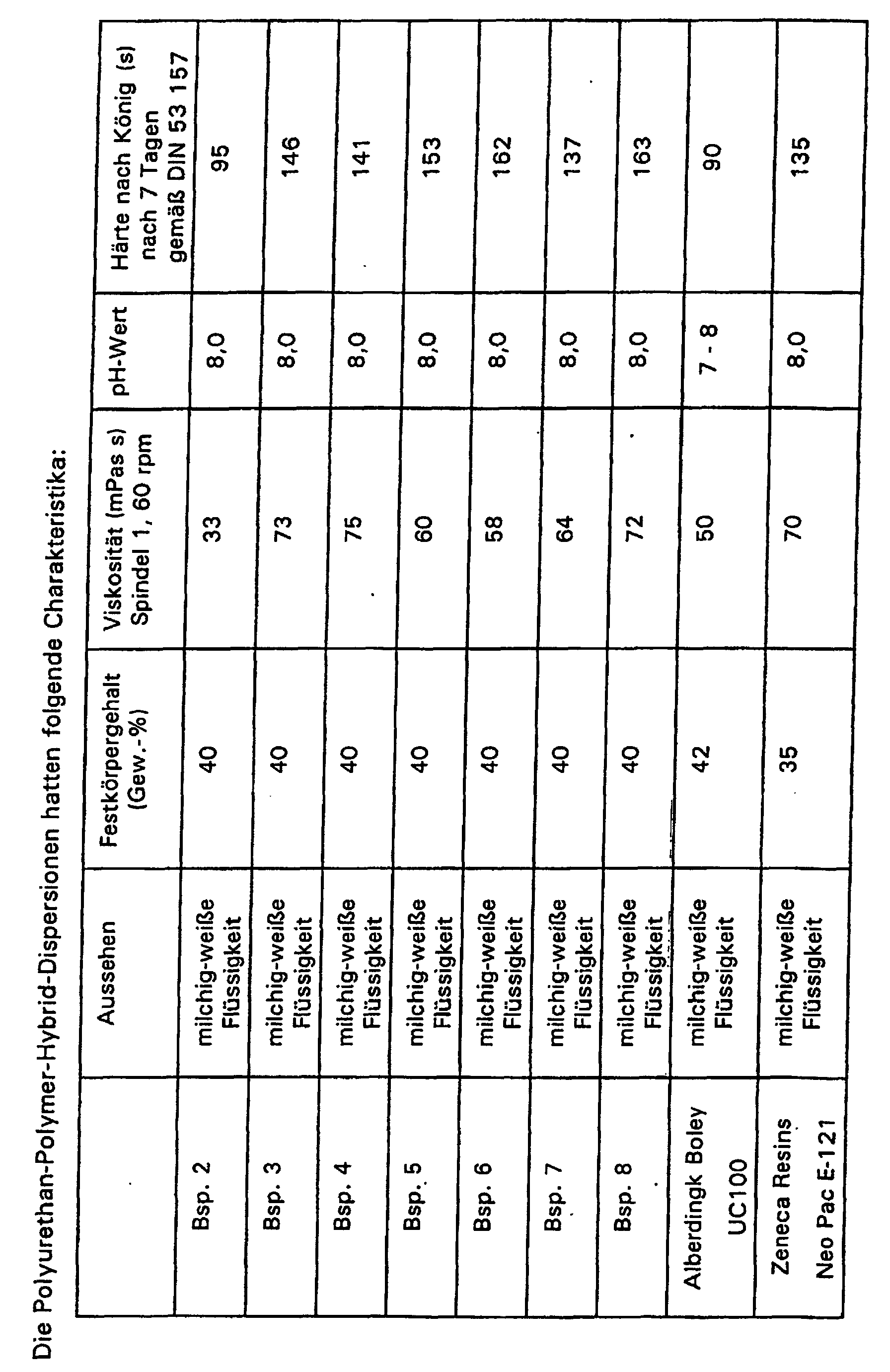

## Patentansprüche

1. Polyurethan-Polymer-Hybrid-Dispersion mit hoher Filmhärte,
**dadurch gekennzeichnet,**
**dass** sie die Umsetzungskomponenten
(A) 3 bis 25 Gew.-% einer Polyol-Komponente bestehend aus
(i) 2 bis 20 Gew.-% eines hochmolekularen Polyols mit mindestens zwei gegenüber Polyisocyanaten reaktiven Hydroxylgruppen und einer Molmasse von 500 bis 4000 Dalton,
(ii) 0,5 bis 5 Gew.-% eines niedermolekularen Polyols mit mindestens zwei gegenüber Polyisocyanaten reaktiven Hydroxylgruppen und einer Molmasse von 50 bis 500 Dalton
(iii) 0,5 bis 3 Gew.-% eines niedermolekularen und anionisch modifizierbaren Polyols mit mindestens zwei gegenüber Polyisocyanaten reaktiven Hydroxylgruppen sowie mindestens einer gegenüber Polyisocyanaten inerten Carboxylgruppe und einer Molmasse von 100 bis 200 Dalton,
(B) 2 bis 20 Gew.-% einer Polyisocyanat-Komponente bestehend aus einem oder mehreren Polyisocyanaten, Polyisocyanat-Homologen und/oder Polyisocyanat-Derivaten mit zwei oder mehreren aliphatischen und/oder aromatischen Isocyanatgruppen,
(C) gegebenenfalls 0 bis 6 Gew.-% einer Lösemittel-Komponente bestehend aus
(i) mindestens einem gegenüber Polyisocyanaten inerten organischen Lösemittel, das nach der Herstellung der Polyurethan-Polymer-Hybrid-Dispersion in dieser verbleibt oder durch Destillation ganz oder teilweise entfernt wird, und/oder
(ii) mindestens einem gegenüber Polyisocyanaten inerten Reaktivverdünner bestehend aus mindestens einer gegenüber Polyisocyanaten inerten organischen Verbindung mit einer oder mehreren radikalisch polymerisierbaren Doppelbindungen,
(D) 0,15 bis 1,5 Gew.-% einer Neutralisations-Komponente bestehend aus mindestens einer anorganischen oder organischen Base,
(E) 0,1 bis 1 Gew.-% einer Kettenverlängerungs-Komponente bestehend aus mindestens einem Polyamin mit zwei oder mehr gegenüber Polyisocyanaten reaktiven Aminogruppen,
(F) 5 bis 40 Gew.-% einer Monomer-Komponente bestehend aus mindestens einem Monomer mit einer oder mehreren radikalisch polymerisierbaren Doppelbindungen,
(G) 0,01 bis 1,5 Gew.-% einer radikalischen Initiator-Komponente bestehend aus mindestens einem lipophilen Radikal-Initiator
sowie als Rest Wasser enthält,
erhältlich indem
in der Reaktionsstufe (a) zunächst eine Polyurethan-Basis-Dispersion hergestellt wird, indem
(a1) die Komponenten (A), (B) und gegebenenfalls (C) gegebenenfalls in Gegenwart eines Katalysators zu einem Polyurethan-Prepolymer umgesetzt werden,
(a2) das Polyurethan-Prepolymer aus Stufe (a1) in das Dispergiermedium Wasser überführt und mit der Neutralisations-Komponente (D) direkt oder indirekt neutralisiert wird und anschließend
(a3) die Polyurethan-Prepolymer-Dispersion aus Stufe (a2) mit der Kettenverlängerungs-Komponente (E), die in vor der Zugabe entnommenen Anteilen des Dispergiermediums gelöst worden ist, umgesetzt wird,
und dann in der Reaktionsstufe (b) eine Polyurethan-Polymer-Hybrid-Dispersion hergestellt wird, indem
(b1) die Polyurethan-Basis-Dispersion aus Stufe (a3) mit einem vorgefertigten Gemisch aus den Komponenten (F) und (G) versetzt wird und anschließend
(b2) durch den thermischen Zerfall der Komponente (G) eine radikalische Polymerisation der Komponente (F) innerhalb der Mizellen der Polyurethan-Basis-Dispersion durchgeführt wird.

2. Polyurethan-Polymer-Hybrid-Dispersion nach Anspruch 1,
**dadurch gekennzeichnet,**
**dass** die Komponente (A) (i) lineare difunktionelle Polyester-Polyole mit einer Molmasse von 1000 bis 4000 Dalton umfaßt.

3. Polyurethan-Polymer-Hybrid-Dispersion nach Anspruch 1 oder 2,
**dadurch gekennzeichnet,**
**dass** die Komponente (A) (i) difunktionelle Polyester-Polyole auf Basis von Adipinsäure, 1,4-Butylenglykol und Ethylengykol umfaßt.

4. Polyurethan-Polymer-Hybrid-Dispersion nach einem der Ansprüche 1 bis 3,
**dadurch gekennzeichnet,**
**dass** die Komponente (E) 20 bis 80 Gew.-% an Wasser als Dispergiermedium enthält.

5. Polyurethan-Polymer-Hybrid-Dispersion nach einem der Ansprüche 1 bis 4,
**dadurch gekennzeichnet**,
der Feststoffgehalt des Polyurethan-Polymers bestehend aus den Komponenten (A) bis (E) 20 bis 60 Gew.-% bezogen auf das Gesamtgewicht der Polyurethan-Dispersion beträgt.

6. Polyurethan-Polymer-Hybrid-Dispersion nach einem der Ansprüche 1 bis 5,
**dadurch gekennzeichnet,**
**daß** die Komponente (F) aus Acrylsäure und deren Derivaten, Methacrylsäure und deren Derivaten und/oder Styrol und dessen Derivaten ausgewählt ist.

7. Polyurethan-Polymer-Hybrid-Dispersion nach einem der Ansprüche 1 bis 6
**dadurch gekennzeichnet,**
**dass** die Komponente (F) Kombinationen von 75 bis 85 Gew.-% Methylmethacrylat, 5 bis 15 Gew.-% n-Butylacrylat und gegebenenfalls bis zu 20 Gew.-% an weiteren Monomeren enthält.

8. Polyurethan-Polymer-Hybrid-Dispersion nach einem der Ansprüche 1 bis 7,
**dadurch gekennzeichnet,**
**dass** die Komponente (F) eine Kombination aus 85 Gew.-% Methylmethacrylat und 15 Gew.-% n-Butylacrylat oder eine Kombination aus 75 Gew.-% Methylmethacrylat, 15 Gew.-% n-Butylacrylat und 10 Gew.-% Styrol enthält.

9. Polyurethan-Polymer-Hybrid-Dispersion nach einem der Ansprüche 1 bis 8,
**dadurch gekennzeichnet,**
**dass** die Komponente (G) einen Radikal-Initiator mit einer oder mehreren Azo- oder Peroxogruppen umfasst.

10. Polyurethan-Polymer-Hybrid-Dispersion nach einem der Ansprüche 1 bis 9,
**dadurch gekennzeichnet,**
**dass** die Komponente (G) einen Radikal-Initiator umfasst, der bei einer Zerfallstemperatur innerhalb des Bereichs von 40 bis 120°C, eine Halbwertszeit von 1 Stunde aufweist.

11. Polyurethan-Polymer-Hybrid-Dispersion nach einem der Ansprüche 1 bis 10,
**dadurch gekennzeichnet,**
**dass** die Komponente (G) 2,2'-Azobisisobutyronitril umfasst.

12. Polyurethan-Polymer-Hybrid-Dispersion nach einem der Ansprüche 1 bis 11,
**dadurch gekennzeichnet,**
**dass** der Feststoffgehalt des Polyurethan-Hybrid-Polymers 20 bis 60 Gew.-%, bezogen auf das Gesamtgewicht der Polyurethan-Polymer-Hybrid-Dispersion beträgt.

13. Polyurethan-Polymer-Hybrid-Dispersion nach einem der Ansprüche 1 bis 12,
**dadurch gekennzeichnet,**
**dass** das Verhältnis der anteiligen Feststoffgehalte aus Polyurethan-Harz und Polymer-Harz 20 bis 80 zu 80 bis 20 Gew.-% beträgt.

14. Verfahren zur Herstellung der Polyurethan-Polymer-Hybrid-Dispersion nach einem der Ansprüche 1 bis 13,
**dadurch gekennzeichnet,**
**dass** in der Reaktionsstufe (a) zunächst eine Polyurethan-Basis-Dispersion hergestellt wird wobei
(a1) 2 bis 20 Gew.-% der hochmolekularen Polyol-Komponente (A) (i), 0,5 bis 5 Gew.-% der niedermolekularen Polyol-Komponente (A) (ii) sowie 0,5 bis 3 Gew.-% des niedermolekularen und anionisch modifizierbaren Polyols (A) (iii) mit 2 bis 20 Gew.-% der Polyisocyanat-Komponente (B) gegebenenfalls in Gegenwart von 0 bis 6 Gew.-% der Lösemittel-Komponente (C) und gegebenenfalls in Gegenwart eines Katalysators zu einem Polyurethan-Prepolymer umgesetzt werden,
(a2) das Polyurethan-Prepolymer aus Stufe (a1) in das Dispergiermedium Wasser überführt und mit 0,15 bis 1,5 Gew.-% der Neutralisations-Komponente direkt oder indirekt neutralisiert wird und anschließend
(a3) die Polyurethan-Prepolymer-Dispersion aus Stufe (a2) mit 0,1 bis 1 Gew.-% der Kettenverlängerungs-Komponente (E), die in vor der Zugabe entnommenen Anteilen des Dispergiermediums gelöst worden ist, umgesetzt wird,
und dann in der Reaktionsstufe (b) eine Polyurethan-Polymer-Hybrid-Dispersion hergestellt wird, indem
(b1) die Polyurethan-Basis-Dispersion aus Stufe (a3) mit einem vorgefertigten Gemisch aus 5 bis 40 Gew.-% der Monomer-Komponente (F) und 0,01 bis 1,5 Gew.-% der Initiator-Komponente (G) versetzt wird und anschließend
(b2) durch den thermischen Zerfall der Komponente (G) eine radikalische Polymerisation der Komponente (F) innerhalb der Mizellen der Polyurethan-Basis-Dispersion durchgeführt wird.

15. Verfahren nach Anspruch 14,
**dadurch gekennzeichnet,**
**dass** die Reaktionsstufe (a1) bei einer Temperatur von 60 bis 120°C, die Reaktionsstufe (a2) bei einer Temperatur von 30 bis 60 °C, die Reaktionsstufe (b1) bei einer Temperatur von 15 bis 35°C, und/oder die Reaktionsstufe (b2) bei einer Temperatur, die innerhalb eines Bereichs von ± 10°C bezogen auf die Temperatur liegt, bei der die Komponente (G) eine Halbwertszeit von 1 Stunde aufweist, durchgeführt wird.

16. Verfahren nach Anspruch 14 oder Anspruch 15,
**dadurch gekennzeichnet,**
**dass** die Komponente (D) in einer solchen Menge zugegeben wird, dass der Neutralisationsgrad bezogen auf die freien Carboxylgruppen des Polyurethan-Prepolymers bei 70 bis 100 Äquivalent-% liegt.

17. Verfahren nach einem der Ansprüche 14-16,
**dadurch gekennzeichnet,**
**dass** das NCO/OH-Äquivalent-Verhältnis der Komponenten (A) und (B) in Reaktionsstufe (a1) auf einen Wert von 1,2 bis 2,0 eingestellt wird.

18. Verfahren nach einem der Ansprüche 14-17,
**dadurch gekennzeichnet,**
**dass** man die Reaktionsstufe (a1) in Gegenwart von 0,01 bis 1 Gew.-% bezogen auf die Komponenten (A), (B), und (C) eines für Polyadditionsreaktionen an Polyisocyanaten geeigneten Katalysators durchführt.

19. Verfahren nach einem der Ansprüche 14 bis 18,
**dadurch gekennzeichnet,**
**dass** eine indirekte Neutralisation der Komponente (A) (iii) erfolgt, wobei in Schritt (a2) ein die Neutralisations-Komponente (D) enthaltendes Dispergiermedium verwendet wird.

20. Verfahren nach einem der Ansprüche 14 bis 18,
**dadurch gekennzeichnet,**
**dass** eine direkte Neutralisation der Komponente (A) (iii) erfolgt, wobei die Neutralisations-Komponente bereits nach Reaktionsstufe (a1) in das Polyurethan-Prepolymer eingerührt wird.

21. Verfahren nach einem der Ansprüche 14 bis 20,
**dadurch gekennzeichnet,**
**dass** die Reaktionsstufe (a3) bei einer Temperatur von 20 bis 60°C durchgeführt wird.

22. Verfahren nach einem der Ansprüche 14 bis 21,
**dadurch gekennzeichnet,**
**dass** die Komponente (E) in der Reaktionsstufe (a3) gelöst im Dispergiermedium zugesetzt wird.

23. Verfahren nach einem der Ansprüche 14 bis 22,
**dadurch gekennzeichnet,**
**dass** die Komponente (E) in einer solchen Menge eingesetzt wird,
**dass** der Kettenverlängerungsgrad bezogen auf die freien Isocyanatgruppen des Polyurethan-Prepolymers bei 50 bis 100 Äquivalent-% liegt.

24. Verfahren nach einem der Ansprüche 14 bis 23,
**dadurch gekennzeichnet,**
**dass** das Initiator/Monomer-Molverhältnis der Komponenten (F) und (G) im Bereich von 0,001 bis 0,05 mol-% eingestellt wird.

25. Verfahren nach einem der Ansprüche 14 bis 24,
**dadurch gekennzeichnet,**
**dass** die Reaktionsstufe (b2) bei einer Temperatur von 80 ± 10°C bei Verwendung von 2,2'-Azobisisobutyronitril als Komponente (G) durchgeführt wird.

26. Verfahren nach einem der Ansprüche 14 bis 25,
**dadurch gekennzeichnet,**
**dass** die Emulsionspolymerisation in der Reaktionsstufe (b2) ohne weitere Emulgatoren durchgeführt wird.

27. Verwendung der Polyurethan-Polymer-Hybrid-Dispersion nach einem der Ansprüche 1 bis 13 als Bindemittel für ein- oder zweikomponentige Lacke, Versiegelungen, Verklebungen und Beschichtungen der Oberflächen von mineralischen Baustoffen.

## Claims

1. A polyurethane/polymer hybrid dispersion with high film hardness, **characterised in that** it contains the reaction components
(A) 3 to 25% by weight of a polyol component consisting of
(i) 2 to 20% by weight of a high-molecular polyol having at least two polyisocyanate-reactive hydroxyl groups and a molar mass of 500 to 4000 daltons,
(ii) 0.5 to 5% by weight of a low-molecular polyol having at least two -polyisocyanate-reactive hydroxyl groups and a molar mass of 50 to 500 daltons,
(iii)0.5 to 3% by weight of a low-molecular and
anionically modifiable polyol having at least two polyisocyanate-reactive hydroxyl groups and also at least one polyisocyanate-inert carboxyl group and a molar mass of 100 to 200 daltons,
(B) 2 to 20% by weight of a polyisocyanate component consisting of one or more polyisocyanates, polyisocyanate homologs and/or polyisocyanate derivatives having two or more aliphatic and/or aromatic isocyanate groups,
(C) optionally, 0 to 6% by weight of a solvent component consisting of
(i) at least one polyisocyanate-inert organic solvent which following the preparation of the polyurethane-polymer hybrid dispersion remains therein or is removed in part or in whole by distillation, and/or
(ii) at least one polyisocyanate-inert reactive diluent consisting of at least one polyisocyanate-inert organic compound having one or more radically polymerisable double bonds,
(D) from 0.15 to 1.5% by weight of a neutralising component consisting of at least one organic or inorganic base,
(E) from 0.1 to 1% by weight of a chain extender component consisting of one or more polyamines having two or more polyisocyanate reactive amino groups,
(F) from 5 to 40% by weight of a monomer component consisting of one or more monomers having one or more radically polymerisable double bonds,
(G) from 0.01 to 1.5% by weight of a radical initiator component consisting of at least one lipophilic free-radical initiator
and water as the remainder, obtainable by firstly preparing in reaction stage (a) a polyurethane base dispersion by
(a1) reacting components (A), (B) and, optionally, (C) in the presence of a catalyst, to give a polyurethane prepolymer,
(a2) transferring the polyurethane prepolymer from stage (a1) to the dispersion medium, water, and neutralising it directly or indirectly using the neutralising component (D), and subsequently
(a3) reacting the polyurethane prepolymer dispersion from stage (a2) with the chain extender component (E), which has dissolved in fractions of the dispersion medium removed prior to the addition,
and then in reaction stage (b) preparing a polyurethane/polymer hybrid dispersion by
(b1) mixing the polyurethane base dispersion from stage (a3) with a preprepared mixture of components (F) and (G), and subsequently
(b2) by means of the thermal decomposition of component (G), carrying out a radical polymerisation of component (F) within the micelles of the polyurethane base dispersion.

2. A polyurethane/polymer hybrid dispersion as in Claim 1, **characterised in that** component (A) (i) comprises linear difunctional polyester-polyols having a molar mass of from 1000 to 4000 daltons.

3. A polyurethane/polymer hybrid dispersion as in Claim 1 or 2, **characterised in that** component (A) (i) comprises difunctional polyester-polyols based on adipic acid, 1,4-butylene glycol and ethylene glycol.

4. A polyurethane/polymer hybrid dispersion as in any one of Claims 1 to 3, **characterised in that** component (E) contains 20 to 80% by weight of water as dispersion medium.

5. A polyurethane/polymer hybrid dispersion as in any one of Claims 1 to 4, **characterised in that** the solids content of the polyurethane polymer consisting of components (A) to (E) is 20 to 60% by weight, based on the overall weight of the polyurethane dispersion.

6. A polyurethane/polymer hybrid dispersion as in any one of Claims 1 to 5, **characterised in that** component (F) is selected from acrylic acid and its derivatives, methacrylic acid and its derivatives, and/or styrene and its derivatives.

7. A polyurethane/polymer hybrid dispersion as in any one of Claims 1 to 6, **characterised in that** component (F) comprises combinations of 75 to 85% by weight methyl methacrylate, 5 to 15% by weight n-butyl acrylate and, optionally, up to 20% by weight of further monomers.

8. A polyurethane/polymer hybrid dispersion as in any one of Claims 1 to 7, **characterised in that** component (F) comprises a combination of 85% by weight methyl methacrylate and 15% by weight n-butyl acrylate or a combination of 75% by weight of methyl methacrylate, 15% by weight n-butyl acrylate, and 10% by weight styrene.

9. A polyurethane/polymer hybrid dispersion as in any one of Claims 1 to 8, **characterised in that** component (G) comprises a radical initiator having one or more azo or peroxo groups.

10. A polyurethane/polymer hybrid dispersion as in any one of Claims 1 to 9, **characterised in that** component (G) comprises a radical initiator having a half-life of 1 hour at a decomposition temperature within the range of 40 to 120°C.

11. A polyurethane/polymer hybrid dispersion as in any one of Claims 1 to 10, **characterised in that** component (G) comprises 2,2'-azobisisobutyro-nitrile.

12. A polyurethane/polymer hybrid dispersion as in any one of Claims 1 to 11, **characterised in that** the solids content of the polyurethane hybrid polymer is 20 to 60% by weight, based on the overall weight of the polyurethane/polymer hybrid dispersion.

13. A polyurethane/polymer hybrid dispersion as in any one of Claims 1 to 12, **characterised in that** the ratio of the fractional solids contents of polyurethane resin and polymer resin is 20 to 80:80 to 20% by weight.

14. A process for preparing the polyurethane/polymer hybrid dispersion as in any one of Claims 1 to 13, **characterised in that** firstly a polyurethane base dispersion is dispersed in reaction stage (a), wherein
(a1) 2 to 20% by weight of the high-molecular polyol component (A) (i), 0.5 to 5% by weight of the low-molecular polyol component (A) (ii) and 0.5 to 3% by weight of the low-molecular and anionically modifiable polyol (A) (iii) are reacted with 2 to 20% by weight of the polyisocyanate component (B) optionally in the presence of 0 to 6% by weight of solvent component (C) and optionally in the presence of a catalyst, to give a polyurethane prepolymer,
(a2) the polyurethane prepolymer from stage (a1) is transferred to the dispersion medium, water, and is neutralised directly or indirectly, and subsequently
(a3) the polyurethane prepolymer dispersion from stage (a2) is reacted with 0.1 to 1% by weight of chain extender component (E) which has been dissolved in fractions of the dispersion medium removed prior to the addition,
and then, in reaction stage (b), a polyurethane/polymer hybrid dispersion is prepared by
(b1) mixing the polyurethane base dispersion from stage (a3) with a preprepared mixture of 5 to 40% weight of monomer component (F) and 0.01 to 1.5% by weight of initiator component (G), and subsequently
(b2) by means of the thermal decomposition of component (G), a radical polymerisation of component (F) is carried out within the micelles of the polyurethane base dispersion.

15. A process as in Claim 14, **characterised in that** reaction stage (a1) is carried out at a temperature of from 60 to 120°C, reaction stage (a2) is carried out at a temperature of from 30 to 60°C, reaction stage (b1) is carried out at a temperature of 15 to 35°C, and/or reaction stage (b2) is carried out at a temperature which lies within a range of ± 10°C, based on the temperature at which component (G) has a half-life of 1 hour.

16. A process as in Claim 14 or Claim 15, **characterised in that** component (D) is added in an amount such that the degree of neutralisation, based on the free carboxyl groups of the polyurethane prepolymer, is 70 to 100 equivalent%.

17. A process as in any one of Claims 14 to 16, **characterised in that** the NCO/OH equivalents ratio of components (A) and (B) in reaction stage (a1) is set at a value of from 1.2 to 2.0.

18. A process as in any one of Claims 14 to 17, **characterised in that** reaction stage (a1) is conducted in the presence of 0.01 to 1% by weight, based on components (A), (B), and (C), of a catalyst suitable for polyaddition reactions of polyisocyanates.

19. A process as in any one of Claims 14 to 18, **characterised in that** component (A) (iii) is neutralised indirectly using in step (a2) a dispersion medium comprising the neutralising component (D).

20. A process as in any one of Claims 14 to 18, **characterised in that** component (A) (iii) is neutralised directly, the neutralising component being stirred into the polyurethane prepolymer just after reaction stage (a1).

21. A process as in any one of Claims 14 to 20, **characterised in that** reaction stage (a3) is conducted at a temperature of from 20 to 60°C.

22. A process as in any one of Claims 14 to 21, **characterised in that** component (E) in reaction stage (a3) is added dissolved in the dispersion medium.

23. A process as in any one of Claims 14 to 22, **characterised in that** component (E) is added in an amount such that the degree of chain extension, based on the free isocyanate groups of the polyurethane prepolymer, is 50 to 100 equivalent%.

24. A process as in any one of Claims 14 to 23, **characterised in that** the initiator/monomer molar ratio of components (F) and (G) is set in the range of from 0.001 to 0.05 mol%.

25. A process as in any one of Claims 14 to 24, **characterised in that** when 2,2'-azobisisobutyro-nitrile is used as component (G) reaction stage (b2) is carried out at a temperature of 80 ± 10°C.

26. A process as in any one of Claims 14 to 25, **characterised in that** the emulsion polymerisation in reaction stage (b2) is carried out without further emulsifiers.

27. A use of the polyurethane/polymer hybrid dispersion as in any one of Claims 1 to 13 as a binder for one or two-component lacquers, seals, bonds and coatings on the surfaces of mineral building materials.

## Revendications

1. Dispersion d'hybride de polyuréthane-polymère à grande dureté de film,
**caractérisée par le fait**
**qu'**elle comprend les composants de réaction
(A) de 3 à 25 % en poids d'un composant polyol constitué de
(i) 2 à 20 % en poids d'un polyol de poids moléculaire élevé et incluant au moins deux groupes hydroxyles réactifs à l'égard des polyisocyanates et d'une masse molaire de 500 à 4000 daltons,
(ii) 0,5 à 5 % en poids d'un polyol de faible poids moléculaire comprenant au moins deux groupes hydroxyles réactifs à l'égard des polyisocyanates et d'une masse molaire de 50 à 500 daltons,
(iii) 0,5 à 3 % en poids d'un polyol de faible poids moléculaire, pouvant être modifié par voie anionique, et comprenant au moins deux groupes hydroxyles réactifs à l'égard des polyisocyanates ainsi qu'au moins un groupe carboxyle inerte à l'égard des polyisocyanates et d'une masse molaire de 100 à 200 daltons,
(B) de 2 à 20 % en poids d'un composant polyisocyanate constitué d'un ou plusieurs polyisocyanates, d'homologues de polyisocyanate et/ou de dérivés de polyisocyanates comprenant deux ou plusieurs groupes isocyanates aliphatiques et/ou aromatiques,
(C) le cas échéant de 0 à 6 % en poids d'un composant solvant constitué de
(i) au moins un solvant organique inerte à l'égard des polyisocyanates qui, après fabrication de la dispersion d'hybride de polyuréthane-polymère, reste présent dans cette dernière ou est éliminé partiellement ou en totalité par distillation et/ou
(ii) au moins un diluant réactif inerte à l'égard des polyisocyanates et constitué d'au moins un composé organique inerte à l'égard des polyisocyanates comprenant une ou plusieurs doubles liaisons polymérisables par voie radicalaire,
(D) de 0,15 à 1,5 % en poids d'un composant de neutralisation constitué d'au moins une base inorganique ou organique,
(E) de 0,1 à 1 % en poids d'un composant d'allongement de chaîne constitué d'au moins une polyamine comprenant deux ou plus de deux groupes amino réactifs à l'égard des polyisocyanates,
(F) de 5 à 40 % en poids d'un composant monomère constitué d'au moins un monomère présentant une ou plusieurs liaisons doubles polymérisables par voie radicalaire,
(G) de 0,01 à 1,5 % en poids d'un composant d'amorçage radicalaire constitué d'au moins un amorceur radicalaire lipophile
et de l'eau comme reste,
susceptible d'être obtenu
en fabriquant lors de la phase de réaction (a) tout d'abord une dispersion polyuréthane de base,
(a1) en faisant réagir les composants (A), (B) et, le cas échéant, (C), éventuellement en présence d'un catalyseur pour former un polyuréthane-prépolymère,
(a2) en transférant le polyuréthane-prépolymère issu de la phase (a1) dans de l'eau en tant que milieu de dispersion et en le neutralisant à l'aide du composant de neutralisation (D) directement ou indirectement et ensuite
(a3) en faisant réagir la dispersion de polyuréthane-prépolymère issue de l'étape (a2) avec le composant d'allongement de chaîne (E) qui a été dissous dans des parties du milieu de dispersion prélevées avant l'addition,
et ensuite en fabriquant dans l'étape de réaction (b) une dispersion d'hybride de polyuréthane-polymère en
(b1) ajoutant à la dispersion de polyuréthane de base issue de l'étape (a1) un mélange préalablement préparé des composants (F) et (G) et ensuite
(b2) en réalisant par décomposition thermique du composant (G) une polymérisation par voie radicalaire du composant (F) au sein des micelles de la dispersion polyuréthane de base.

2. Dispersion d'hybride de polyuréthane-polymère selon la revendication 1,
**caractérisée par le fait**
**que** le composant (A) (i) comprend des polyols-polyesters linéaires difonctionnels d'une masse molaire de 1000 à 4000 daltons.

3. Dispersion d'hybride de polyuréthane-polymère selon les revendications 1 ou 2,
**caractérisée par le fait**
**que** le composant (A) (i) comprend des polyols-polyesters difonctionnels à base d'acide adipique, de 1,4-butylène glycol et d'éthylène glycol.

4. Dispersion d'hybride polyuréthane-polymère selon l'une des revendications 1 à 3,
**caractérisée par le fait**
**que** le composant (E) contient de 20 à 80 % en poids d'eau comme milieu de dispersion.

5. Dispersion d'hybride de polyuréthane-polymère selon l'une des revendications 1 à 4,
**caractérisée par le fait**
**que** la teneur en matières sèches du polyuréthane-polymère constitué des composants (A) à (E) est de 20 à 60 % en poids du poids par rapport au total de la dispersion polyuréthane.

6. Dispersion d'hybride de polyuréthane-polymère selon l'une des revendications 1 à 5,
**caractérisée par le fait**
**que** le composant (F) est choisi parmi l'acide acrylique et ses dérivés ou l'acide méthacrylique et ses dérivés et/ou le styrène et ses dérivés.

7. Dispersion d'hybride de polyuréthane-polymère selon l'une des revendications 1 à 6,
**caractérisée par le fait**
**que** le composant (F) contient des combinaisons de 75 à 85 % en poids de méthylacrylate de méthyle, de 5 à 15 % en poids d'acrylate de n-butyle et éventuellement jusqu'à 20 % en poids d'autres monomères.

8. Dispersion d'hybride de polyuréthane-polymère selon l'une des revendications 1 à 7,
**caractérisée par le fait**
**que** le composant (F) contient une combinaison de 85 % en poids de méthylacrylate de méthyle et de 15 % en poids d'acrylate de n-butyle ou une combinaison de 75 % en poids de méthylacrylate de méthyle, de 15 % en poids d'acrylate de n-butyle et de 10 % en poids de styrène.

9. Dispersion d'hybride de polyuréthane-polymère selon l'une des revendications 1 à 8,
**caractérisée par le fait**
**que** le composant (G) comprend un amorceur radicalaire ayant un ou plusieurs groupes azo ou peroxo.

10. Dispersion d'hybride de polyuréthane-polymère selon l'une des revendications 1 à 9,
**caractérisée par le fait**
**que** le composant (G) comprend un amorceur radicalaire, présentant une demi-vie d'une heure pour une température de décomposition située dans une plage de 40 à 120 °C.

11. Dispersion d'hybride de polyuréthane-polymère selon l'une des revendications 1 à 10,
**caractérisée par le fait**
**que** le composant (G) comprend du 2,2'-azobisisobutyronitrile.

12. Dispersion d'hybride de polyuréthane-polymère selon l'une des revendications 1 à 11,
**caractérisée par le fait**
**que** la teneur en matières sèches du polyuréthane hybride polymère est de 20 à 60 % en poids par rapport au poids total de la dispersion d'hybride de polyuréthane-polymère.

13. Dispersion d'hybride de polyuréthane-polymère selon l'une des revendications 1 à 12,
**caractérisé par le fait**
**que** le rapport des teneurs en matières sèches de la résine polyuréthane et de la résine polymère est de 20 à 80 pour 80 à 20% en poids.

14. Procédé de fabrication d'une dispersion d'hybride de polyuréthane-polymère selon l'une des revendications 1 à 13,
**caractérisée par le fait**
**que** dans l'étape de réaction (a), on commence par fabriquer une dispersion polyuréthane de base
(a1) en faisant réagir de 2 à 20 % en poids d'un composant polyol de poids moléculaire élevé (A) (i), de 0,5 à 5 % en poids du composant de polyol (A) (ii) de faible poids moléculaire ainsi que de 0,5 à 3 % en poids du polyol (A) (iii) de faible poids moléculaire et modifiable par voie anionique avec 2 à 20 % en poids du composant polyisocyanate (B) éventuellement en présence de 0 à 6 % en poids du composant solvant (C) et éventuellement en présence d'un catalyseur de façon à obtenir un polyuréthane-prépolymère.
(a2) en transférant le polyuréthane-prépolymère issu de l'étape (a1) dans l'eau en tant que milieu de dispersion et en le neutralisant directement ou indirectement à l'aide de 0,15 à 1,5 % en poids du composant de neutralisation et ensuite
(a3) en faisant réagir la dispersion polyuréthane-polymère issue de l'étape (a2) avec 0,1 à 1 % en poids du composant d'allongement de chaîne (E) qui a été dissout dans des parties du milieu de dispersion prélevées avant l'addition,
et **qu'**ensuite, au cours de l'étape de réaction (b) on prépare une dispersion d'hybride polyuréthane-polymère
(b1) en ajoutant à la dispersion polyuréthane de base issue de l'étape (a3) un mélange préalablement préparé composé de 5 à 40 % en poids de composant (F) monomère et de 0,01 à 1,5 % en poids du composant d'amorçage (G) et ensuite
(b2) en effectuant par la décomposition thermique du composant (G) une polymérisation radicalaire du composant (F) au sein des micelles de la dispersion polyuréthane de base.

15. Procédé selon la revendication 14,
**caractérisé par le fait**
**que** l'étape de réaction (a1) est réalisée à une température de 60 à 120 °C, l'étape de réaction (a2) à une température de 30 à 60 °C, l'étape de réaction (b1) à une température de 15 à 35 °C et/ou l'étape de réaction (b2) à une température située à l'intérieur d'un domaine de ± 10 °C par rapport à la température à laquelle le composant (G) présente une demi-durée de vie d'une heure.

16. Procédé selon la revendication 14 ou la revendication 15,
**caractérisé par le fait**
**que** le composant (D) est additionnée en une quantité telle que le degré de neutralisation rapporté aux groupes carboxyles libres du polyuréthane-prépolymère se situe vers 70 à 100 équivalents %.

17. Procédé selon l'une des revendications 14 à 16,
**caractérisé par le fait**
**que** le rapport d'équivalents NCO/OH des composants (A) et (B) dans l'étape de réaction (a1) est réglé à une valeur de 1,2 à 2,0.

18. Procédé selon l'une des revendications 14 à 17,
**caractérisé par le fait**
**que** l'étape de réaction (a1) es effectuée en présence de 0,01 à 1 % en poids rapporté aux composants (A), (B) et (C) d'un catalyseur approprié aux réactions de polyaddition sur des polyisocyanates.

19. Procédé selon l'une des revendications 14 à 18,
**caractérisé par le fait**
**qu'**une neutralisation indirecte du composant (A) (iii) est effectuée en utilisant dans l'étape (a2) un milieu de dispersion contenant le composant de neutralisation (D).

20. Procédé selon l'une des revendications 14 à 18,
**caractérisée par le fait**
**qu'**une neutralisation directe du composant (A) (iii) est effectuée, le composant de neutralisation étant introduit dès l'étape de réaction (a1) dans le polyuréthane-prépolymère.

21. Procédé selon l'une des revendications 14 à 20,
**caractérisé par le fait**
**que** l'étape de réaction (a3) est effectuée à une température de 20 à 60 °C.

22. Procédé selon l'une des revendications 14 à 21,
**caractérisé par le fait**
**que** le composant (E) est, dans l'étape de réaction (a3), additionné dissous dans le milieu de dispersion.

23. Procédé selon l'une des revendications 14 à 22,
**caractérisé par le fait**
**que** le composant (E) est utilisé en une quantité telle que le degré d'allongement de chaîne rapporté aux groupes isocyanates libres du polyurétane-prépolymère soit de 50 à 100 équivalents %.

24. Procédé selon l'une des revendications 14 à 23,
**caractérisé par le fait**
**que** le rapport molaire de l'amorceur et du monomère des composants (F) et (G) est réglé dans le domaine de 0,001 à 0,05 mol %.

25. Procédé selon l'une des revendications 14 à 24,
**caractérisé par le fait**
**que** l'étape de réaction (b2) est effectuée à une température de 80 ± 10 °C en utilisant du 2,2'-azobisisobutyronitrile comme composant (G).

26. Procédé selon l'une des revendications 14 à 25,
**caractérisé par le fait**
**que** la polymérisation d'émulsion dans l'étape de réaction (b2) est effectuée sans autres émulsifiants.

27. Utilisation de la dispersion d'hybride de polyuréthane-polymère selon une des revendications 1 à 13 comme liant pour des laques mono ou bi-composants, des étanchifications, des collages et des revêtements des surfaces de matériaux minéraux de construction.
